Europäisches Patentamt

European Patent Office

Office européen des brevets

(19)

(11) Veröffentlichungsnummer: **0 501 104 A1**

# (12) EUROPÄISCHE PATENTANMELDUNG

(21) Anmeldenummer: **92100173.1**

(22) Anmeldetag: **08.01.92**

(51) Int. Cl.5: **C21C 5/52**, C21C 7/00,
F27B 3/04

(30) Priorität: **18.02.91 DE 4104910**

(43) Veröffentlichungstag der Anmeldung:
**02.09.92 Patentblatt 92/36**

(84) Benannte Vertragsstaaten:
**AT DE ES FR GB IT**

(71) Anmelder: **MAN Gutehoffnungshütte
Aktiengesellschaft
Bahnhofstrasse 66 Postfach 11 02 40
W-4200 Oberhausen 11(DE)**

(72) Erfinder: **Wolters, Günter, Dipl.-Ing.
Kaiserswerther Strasse 274
W-4000 Düsseldorf 30(DE)**
Erfinder: **Stempel, Willi, Dipl.-Ing.
Leuthenstrasse 12
W-4200 Oberhausen 11(DE)**
Erfinder: **Juenemann, Gerhard, Dipl.-Ing.
Gerdesfeld 25
W-4630 Bochum 6(DE)**

(54) **Stahlnachbehandlungsanlage.**

(57) Die pfannenmetallurgische Behandlungsanlage dient der wechselseitigen Behandlung von Stahlschmelzen durch Aufheizen und Vakuumbehandlung. Sie besteht aus zwei Behandlungsstationen, die mit je einem stationären Kessel (1,2) zur Aufnahme der Stahlgießpfanne (3,4) sowie mit je einer seitlich verfahrbaren Vakuumdeckeleinrichtung (13) versehen sind. Eine zentral zwischen beiden Behandlungsstationen angeordnete Aufheizeinrichtung mit einem schwenkbaren Aufheizdeckel (9) wird jeweils über eine der beiden Stahlgießpfannen (3,4) in Arbeitsstellung gebracht.

FIG. 1

Rank Xerox (UK) Business Services

Die Erfindung betrifft eine Anlage zur metallurgischen Nachbehandlung von in Stahlgießpfannen befindlichem geschmolzenen Stahl durch Aufheizung und Vakuumbehandlung.

Bei bisher bekannten pfannenmetallurgischen Anlagen für Aufheiz- und Vakuumbetrieb ist es üblich, für jede der genannten Behandlungen einen gesonderten Behandlungsstand vorzusehen, wobei die zur Behandlung kommende Stahlgießpfanne mittels entsprechender Transporteinrichtungen (Kran oder Verschiebefahrzeug) in die jeweilige Behandlungsposition gebracht wird.

Die in der Aufheiz- und der Vakuumanlage erreichten Behandlungszeiten und die Transportzeiten zwischen dem Schmelzgefäß, das aus mindestens einer Konverteranlage bzw. mindestens einem Elektro-Lichtbogenofen bestehen kann, einschließlich der metallurgischen Nachbehandlungsanlagen bis zu den Gießeinrichtungen, beispielsweise eine Stranggießanlage, lassen keinen kontinuierlichen Gießbetrieb zu. Es können kaum mehr als 1 - 2 Schmelzen im sog. Sequenzguß vergossen werden.

Ein längerer Sequenzguß von beispielsweise zehn hintereinander vergossenen Schmelzen ist nur möglich, wenn die Schmelz- und Behandlungszeiten in den einzelnen Aggregaten einschließlich der Transportzeiten sowie erforderlicher Nebenzeiten kleiner oder gleich der Gießzeit einer Stahlgießpfanne in der Stranggießanlage ist.

Bei Einzelguß oder kleinen Sequenzen muß die Stranggießanlage nach Beendigung eines Abgusses für den nächsten Guß neu gerüstet werden. Diese Rüstzeiten können bis zu dreißig oder mehr Minuten betragen und mindern durch diese betrieblich bedingten Stillstandszeiten die Produktivität bzw. Stundenleistung des gesamten Stahlwerkes.

Die Aufgabe der Erfindung besteht darin, die für eine kontinuierliche Stahlerzeugung und Erzielung von längeren Stranggießsequenzen erforderliche Aufheiz- und Vakuumbehandlung des flüssigen, jedoch zum Guß noch nicht vorbereiteten Stahles zu verkürzen.

Diese Aufgabe wird erfindungsgemäß in der Weise gelöst, wie es in den Patentansprüchen angegeben ist.

Durch die konzentrierte Anordnung des Behandlungsstandes für zwei Stahlgießpfannen wird erreicht, daß zum Aufheizen nur eine Aufheizvorrichtung (auch Pfannenofen genannt) und zum Evakuieren nur ein Vakuumpumpenaggregat erforderlich ist.

Im nachfolgend beschriebenen Auführungsbeispiel weist die Evakuiereinrichtung zwei Vakuumdeckel auf.

Bei der einzigen Evakuiereinrichtung kommt man gegebenenfalls mit nur einem Vakuumdeckel aus. Dazu muß die Evakuiereinrichtung, die zweckmäßigerweise auf Schienen verfahrbar vorgesehen ist, hinsichtlich ihres Fahrweges so konzipiert werden, daß sie wechselweise von einem zum anderen Behandlungsstand gefahren wird. Dabei ist zu berücksichtigen, daß die zwischen beiden Behandlungsständen befindliche Aufheizeinrichtung um- oder überfahren wird.

Die Behandlungseinrichtungen werden durch Abschwenken der Aufheizvorrichtung bzw. durch Umschalten der Zuführungsleitung zum Vakuumpumpenaggregat wechselseitig für das Aufheizen oder Evakuieren benutzt.

Die erfindungsgemäße Vorrichtung läßt sich in bestehende Stahlwerksanlagen einbauen. Da ein geringer Platzbedarf erforderlich ist, kann die Vorrichtung auch in Werken mit beengten Platzverhältnissen bei niedrigem Aufwand für die Installation durchgeführt werden.

Der wesentliche Vorteil bei Verwendung des erfindungsgemäßen Behandlungsstandes für zwei mit geschmolzenem Stahl gefüllte Stahlgießpfannen besteht darin, ein bei Anlagen des Standes der Technik notwendiges Umsetzen der Stahlgießpfannen zwischen den Behandlungsvorgängen Aufheizen und Evakuieren zu vermeiden, ferner die Temperaturverluste des flüssigen Stahles während der Behandlung und des Transportes zu minimieren, in der Stranggießanlage Sequenzgüsse von mehr als zwei Schmelzen durchzuführen und die so gewonnenen Rüstzeiten der Stranggießanlage für eine vermehrte Stahlerzeugung zu nutzen.

Die Anzahl der Schmelzen, die in Sequenzen vergossen werden können, sind nicht mehr von betrieblichen Einfluß- und Störgrößen, sondern allein vom Qualitätsprogramm (Stahlanalyse), einschließlich der geforderten Abmessungen des gegossenen Stahles (Breite x Höhe), abhängig.

Der Ablauf der Pfannenbehandlung bei der erfindungsgemäßen Anlage umfaßt jeweils folgende mögliche Behandlungsschritte:

Phase 1: Aufheizen (Pfannenofen-Behandlung)

- Pfanne in Behandlungsstand (Kessel) einsetzen
- Beruhigen der Schmelze
- Schlackenbildung und Spülen mit Inertgasen
- Probe- und Temperaturnahme
- Warmhaltedeckel abnehmen
- Einschwenken des Pfannenofendeckels in Aufheizposition
- Aufheizen
- Abschwenken des Pfannenofendeckels
- Temperaturnahme
- Warmhaltedeckel auflegen

Phase 2: Evakuieren (Vakuum-Behandlung)

- Einfahren und Absenken des Vakuumdeckels
- Evakuieren für Vor- und Tiefvakuum
- Fluten des Kessels
- Temperatur- und Probenahme
- Legieren und Spülen
- Analysenfeinkorrektur
- Vakuumdeckel anheben und abfahren
- Herausheben der abgedeckten Pfanne aus dem Behandlungsstand (Kessel) und Transport zur Stranggießanlage

Die hier aufgeführten Behandlungsschritte können in o.g. Reihenfolge durchgeführt werden. Einzelne Schritte der Behandlung, wie z.B. Spülen, Temperaturmessen oder Probenahme, Fluten des Kessels etc., können wiederholt bzw. in einer anderen Reihenfolge durchgeführt werden.

Die Gesamtzeit einer metallurgischen Nachbehandlung beträgt zwischen 75 und 85 Min., wobei die Behandlung der Schmelze in der Pfannenofenanlage jeweils in der ersten Hälfte und die Behandlung in der Vakuumeinrichtung in der zweiten Hälfte der Behandlungszeit liegen. Bei entsprechender Einhaltung der Sequenzzeit ist somit sichergestellt, daß Überschneidungen zwischen der Pfannenofenbehandlung (Aufheizen) und der Vakuumbehandlung nicht eintreten können. Zum anderen erlaubt die gewählte Anordnung der Einrichtungen und der schrittweise Ablauf der Aufheiz- und Vakuumbehandlung die sichere Einhaltung von einer größeren Anzahl Gießsequenzen auf der im Ausführungsbeispiel vorgesehenen Stranggußanlage.

Ausführungsbeispiele der Erfindung werden nachstehend anhand von schematischen Prinzipzeichnungen näher erläutert.

Fig. 1 zeigt in der Draufsicht die metallurgische Nachbehandlungsanlage,

Fig. 2 in der Draufsicht die metallurgische Nachbehandlungsanlage, in der beide Behandlungsstände in Betriebsposition sind,

Fig. 3 einen Längsschnitt durch die Behandlungsanlage und

Fig. 4 einen Querschnitt der schwenkbar angeordneten Aufheizeinrichtung (Pfannenofenanlage).

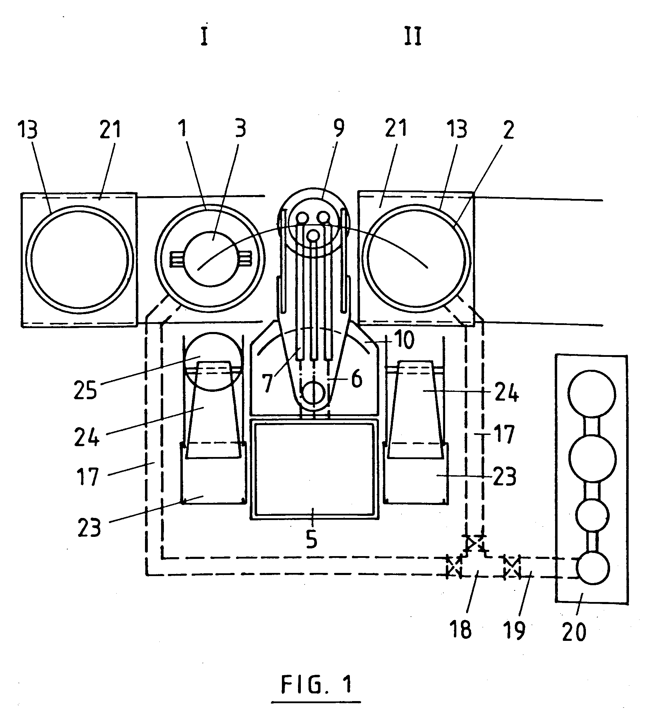

Die in Fig. 1 dargestellte metallurgische Stahl-Nachbehandlungsanlage umfaßt zwei stationäre Behandlungsstände, d.h. Kessel (1, 2), die im wesentlichen aus einem nach oben offenen Behälter zur Aufnahme der zu behandelnden Stahlgießpfannen (3, 4) bestehen, die jeweils mit einem heb- und senkbaren sowie seitlich verfahrbaren Vakuumdeckel (13) verschlossen werden können, und ferner eine zentral zwischen den beiden Behandlungsständen angeordnete Aufheizeinrichtung mit ihrem heb- und senkbaren Pfannenofendeckel (9) einschließlich der elektrischen Stromzuführung (7), d.h. der Elektroden-Tragarm-Konstruktion für die Stromzuführung und der zentralen Abgasführung in Gestalt der Rauchgasabsaugleitung (8), die um einen Drehpunkt (12) schwenkbar angeordnet ist und die über eine der beiden Behandlungsstationen (stationäre Kessel 1, 2) in Arbeitsstellung gebracht werden kann, im Ausführungsbeispiel Kessel (1).

Die Ausführung der Anlage sieht vor, daß für die in Sequenz durchzuführende Stahl-Nachbehandlung, die im wesentlichen aus Aufheizen, Evakuieren und Entgasen einschließlich Analyseneinstellung durch Auflegieren und Temperatureinstellung besteht, die beiden stationären Kessel (1, 2) bis zu einem gemeinsamen Absperrorgan oder Umschaltorgan (18) mit je einer Vakuumsaugleitung (17) und danach über eine zentrale Vakuumsaugleitung (19) mit nur einem einzigen Vakuumpumpenaggregat (20) verbunden sind.

Für die Abführung der Rauchgase, die beim Aufheizen der Schmelze mit den Elektroden (9a) des heb- und senkbaren Pfannenofendeckels (9) entstehen, ist in der Schwenkvorrichtung (6) eine über ein Drehgelenk (14) mit einer stationären Sammelleitung (15) verbundene Rauchgasabsaugleitung (8) integriert.

Die von einem Konverter oder einem Elektrolichtbogenofen kommende Schmelze ist in der Stahlgießpfanne (3, 4) mit einem mit Feuerfestmaterial isolierten Warmhaltedeckel (25) abgedeckt.

Für das Abnehmen bzw. Aufsetzen dieses Warmhaltedeckels (25) vor bzw. nach dem Aufheizen der Schmelze wird im Ausführungsbeispiel für jeden Behandlungsstand (Kessel 1, 2) je eine gleisgebundene, verfahrbare Vorrichtung (23) mit einer Auflege- und Abnahmevorrichtung (24) für die Warmhaltedeckel (25) vorgesehen.

Gegebenenfalls kann anstelle einer gleisgebundenen Vorrichtung auch ein gleisloses Fahrzeug (nicht dargstellt) zur Handhabung des Warmhaltedeckels verwendet werden. Ein derartiges Fahrzeug kann an wehcselnde Standorte fahren.

Fig. 1 zeigt im übrigen den Betriebszustand, in dem die Gießpfanne (3) in den Behandlungsstand (Kessel 1) eingesetzt und der Warmhaltedeckel (25) von der Auflege- und Abnahmevorrichtung (24) abgenommen wurde.

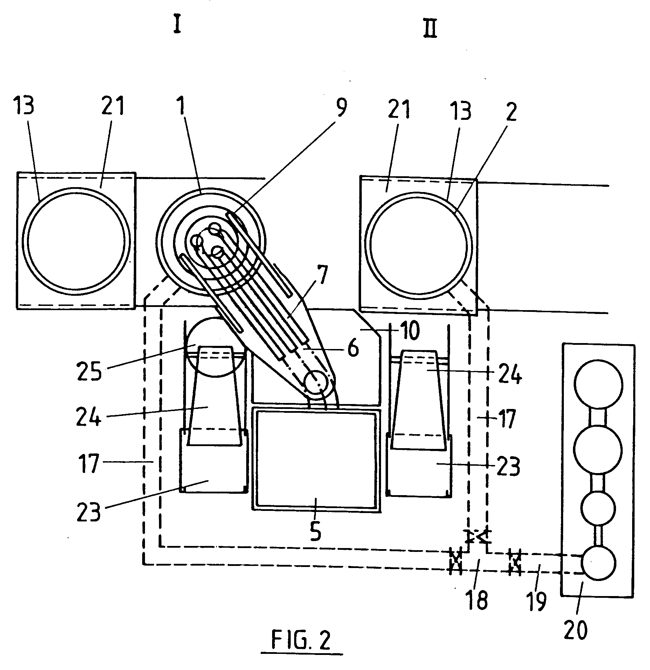

Fig. 2 zeigt die metallurgische Nachbehandlungsanlage in einer weiteren Betriebsposition, in der die Gießpfanne (3) im Behandlungsstand (Kessel 1) aufgeheizt und die Gießpfanne (4) im Behandlungsstand (Kessel 2) der Vakuumbehandlung unterzogen wird.

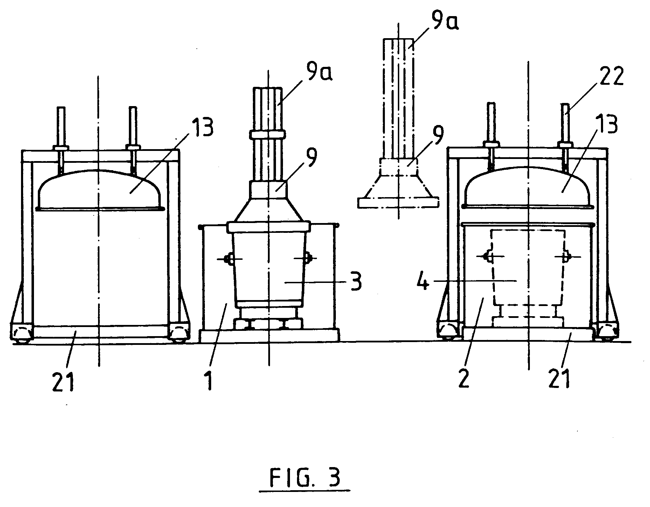

Fig. 3 zeigt einen Längsschnitt durch die Behandlungsanlage entsprechend Fig. 2. Die Gießpfanne (3) im Kessel (1) wird durch die Elektroden des heb- und senkbaren Pfannenofendeckels (9) beheizt, während die gestrichelt dargestellte Gießpfanne (4) im Kessel (2) der Vakuumbehandlung unterzogen wird.

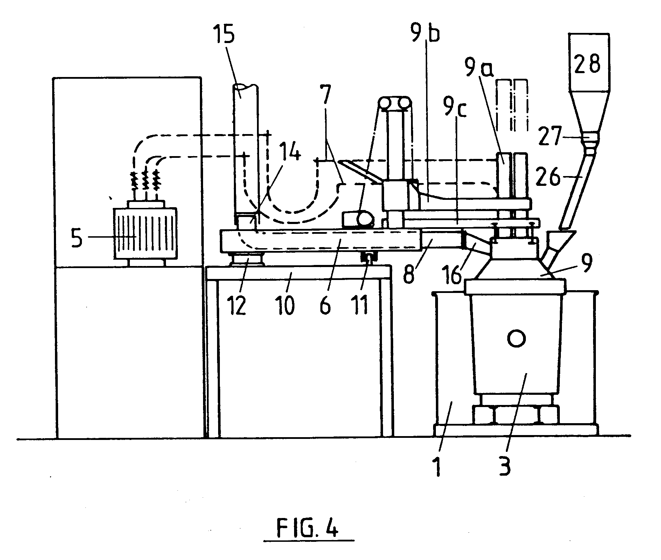

Fig. 4 zeigt einen Querschnitt der gesamten Aufheizeinrichtung in Aufheizposition. Der Pfannenofendeckel (9) befindet sich über der Gießpfanne (3), die in den Kessel (1) eingesetzt wurde. Der Pfannenofendeckel weist unterseitig einen doppelten umlaufenden Rand auf, mit dem er labyrinthartig den oberen Rand der Stahlgießpfanne berührungslos umgreift. Die Aufheizeinrichtung, hier in Arbeitsposition dargestellt, besteht aus der Schwenkvorrichtung (6) mit Pfannenofendeckel (9), der Hub- und Senkvorrichtung für die Elektroden (9b) sowie der Hub- und Senkvorrichtung für den Pfannenofendeckel (9c), die sich im vorderen Teil mittels Rollen (11) auf einer Unterstützungskonstruktion (10) abstützt. Die Schwenkvorrichtung (6) ist um einen Schwenkpunkt (12) in die jeweilige Arbeits- oder Warteposition drehbar. Eine Rauchgasabsaugleitung (8) ist über ein Drehgelenk (14) mit der stationären Sammelleitung (15) verbunden. Während des Heizvorganges ist der Rauchgasstutzen (16) des Pfannenofendeckels (9) mit der Rauchgasabsaugleitung (8) bündig zusammengeführt.

Während der Stahlnachbehandlung, entweder beim Aufheizen oder bei der Vakuumbehandlung, werden jeweils über ein schwenkbar angeordnetes Rohr (26) aus einer gemeinsamen Bunkeranlage (28) über entsprechende Dosiereinrichtungen (27) Zuschläge zur Schlackenbildung und Legierungsmittel für die Einstellung der Endanalyse des behandelten, geschmolzenen Stahles zugegeben.

Bezugsziffern-Liste:

1    Stationärer Kessel (Behandlungsstand I)
2    Stationärer Kessel (Behandlungsstand II)
3    Stahlgießpfanne (Behandlungsstand I)
4    Stahlgießpfanne (Behandlungsstand II
5    Transformator/Trafo
6    Schwenkvorrichtung
7    Elektrische Stromzuführung
8    Rauchgasabsaugleitung
9    Pfannenofendeckel
9a    Elektroden
9b    Elektroden-Hub- und -Senkvorrichtung
9c    Pfannenofendeckel-Hub- und -Senkvorrichtung
10    Unterstützungskonstruktion
11    Rollen
12    Schwenkpunkt
13    Vakuumdeckel
14    Drehgelenk
15    Stationäre Sammelleitung
16    Rauchgasstutzen
17    Vakuumsaugleitung
18    Absperr- oder Umschaltorgan
19    Zentrale Vakuumsaugleitung
20    Vakuumpumpenaggregat
21    Vakuumdeckel-Unterstützungskonstruktion
22    Hub- und Senkvorrichtung
23    fahrbare Vorrichtung für Warmhaltedeckel
24    Auflege- und Abnahmevorrichtung für Warmhaltedeckel
25    Warmhaltedeckel
26    Schwenkbares Rohr
27    Dosiervorrichtung
28    Bunkeranlage

**Patentansprüche**

1.   Anlage zur metallurgischen Nachbehandlung von in Stahlgießpfannen befindlichem geschmolzenen Stahl durch Aufheizung und Vakuumbehandlung,
dadurch gekennzeichnet,
daß die metallurgische Nachbehandlungsanlage zwei stationäre Kessel (1, 2) zur Aufnahme von Stahlgießpfannen (3, 4) aufweist, daß für die wechselseitige Aufheizung beider Stahlgießpfannen (3, 4) eine einzige Aufheizeinrichtung, bestehend aus einem Trafo (5), einer Schwenkvorrichtung (6) mit elektrischer Stromzuführung (7) einschl. heb- und senkbarer Elektrodentragkonstruktion (7, 9a, 9b), einer Rauchgasabsaugleitung (8) sowie heb- und senkbarem Pfannenofendeckel (9), vorgesehen ist und daß für die wechselseitige Vakuumbehandlung beider Stahlgießpfannen (3, 4) eine einzige Evakuiereinrichtung mit mindestens einem seitlich verfahrbaren, heb- und senkbaren Vakuumdeckel (13) angeordnet ist.

2.   Anlage nach Anspruch 1,
dadurch gekennzeichnet,
daß die mittig zwischen den stationären Kesseln (1, 2) angeordnete, motorisch angetriebene Schwenkvorrichtung (6) mit Pfannenofendeckel (9), sich im vorderen Teil mittels Rollen (11) auf einer Unterstützungskonstruktion (10) abstützend, um einen Drehpunkt (12) schwenkbar ist.

3.   Anlage nach den Ansprüchen 1 und 2,
dadurch gekennzeichnet,
daß die auf der Schwenkvorrichtung (6) angeordnete Rauchgasabsaugleitung (8) einenends über ein Drehgelenk (14) mit einer stationären Sammelleitung (15) verbunden ist und anderenends während des Aufheizvorgangs bündig mit dem Rauchgasstutzen (16) des Pfannenofendeckels (9) zusammengeführt ist.

4.   Anlage nach Anspruch 1,
dadurch gekennzeichnet,
daß die Evakuiereinrichtung als verfahrbare Unterstützungskonstruktion (21) mit Einrichtungen (22) zum Absenken und Anheben des Vakuumdeckels (13) ausgebildet ist.

5. Anlage nach Anspruch 1,
dadurch gekennzeichnet,
daß die beiden stationären Kessel (1, 2) mit jeweils einer Vakuumsaugleitung (17) versehen sind, die über mindestens ein Absperr- oder Umschaltorgan (18) mit der zentralen Vakuumsaugleitung (19) des gemeinsamen Vakuumpumpenaggregates (20) verbunden sind.

6. Anlage nach Anspruch 1,
dadurch gekennzeichnet,
daß für beide Stahlgießpfannen (3, 4) mindestens eine fahrbare Vorrichtung (23) vorgesehen ist, die mit Einrichtungen (24) zum Auflegen und Abnehmen von Warmhaltedeckeln (25) ausgerüstet ist.

I           II

13   21     1    3      9   21   13    2

25

24

17

23

7     6

10

5

24

17

23

18   19   20

## FIG. 1

I

II

13  21  1  9  21  13  2

7

10

6

25

24

17

23

5

24

17

23

18  19

20

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | STAHL UND EISEN. Bd. 111, Nr. 5, 15. Mai 1991, DÜSSELDORF DE Seiten 121 - 127; BORUTTA ET AL.: 'Automatisierte Prozessführung für Pfannenofen und Standentgasung in einem Edelstahlwerk.' * Seite 122, linke Spalte, Absatz 2 -Absatz 3; Abbildung 1 * | 1-6 | C21C5/52 C21C7/00 F27B3/04 |
| Y | DE-A-3 446 833 (MAN GUTEHOFFNUNGSHÜTTE) * Seite 3, Zeile 29 - Seite 4, Zeile 7; Anspruch; Abbildungen * | 1,2,4,6 | |
| Y | DE-A-1 508 112 (ALLMÄNA SVENSKA ELEKTRISKA AKTIEBOLAGET) * Abbildungen 3-5 * | 3 | |
| Y | DE-A-2 043 861 (RHEINSTAHL AG) * Seite 11, Zeile 9 - Zeile 19; Ansprüche 5,6; Abbildung * | 5 | |
| A | DE-A-3 102 499 (MANNESMANN AG) | | |

RECHERCHIERTE SACHGEBIETE (Int. Cl.5)

C21C
F27B
B22D

Der vorliegende Recherchenbericht wurde für alle Patentansprüche erstellt

| Recherchenort | Abschlußdatum der Recherche | Prüfer |
|---|---|---|
| DEN HAAG | 01 JUNI 1992 | OBERWALLENEY R.P. |